# EUROPEAN PATENT SPECIFICATION

(11) **EP 3 542 870 B1**
(45) Date of publication and mention of the grant of the patent: **09.08.2023**
(21) Application number: 19164377.4
(22) Date of filing: 21.03.2019
(51) Int. Cl.: A62C 2/00, F24F 11/30, F24F 12/00

(54) **A VENTILATION SYSTEM FOR A BUILDING HAVING A SMOKE EVACUATION FUNCTIONALITY AND A METHOD FOR OPERATING SAID SYSTEM**
BELÜFTUNGSSYSTEM FÜR EIN GEBÄUDE MIT EINER RAUCHABZUGSFUNKTIONALITÄT UND VERFAHREN ZUM BETREIBEN DIESES SYSTEMS
SYSTÈME DE VENTILATION D'UN BÂTIMENT DOTÉ D'UNE FONCTIONNALITÉ D'ÉVACUATION DE FUMÉE ET PROCÉDÉ DE FONCTIONNEMENT DUDIT SYSTÈME

(30) Priority: 22.03.2018 SE 1850323
(43) Date of publication of application: 25.09.2019
(73) Proprietor: Abrahamssons Hantverk-&Fastighetsservice AB, 194 54 Upplands Väsby (SE)
(72) Inventor: ABRAHAMSSON, Michael, 18593 Vaxholm (SE)
(74) Representative: Novitas Patent AB

(56) References cited:
- EP-A1- 2 726 793
- EP-A2- 2 314 944
- WO-A1-2017/217915
- DE-A1- 19 856 193
- DE-U1-202013 103 815
- JP-A- 2005 245 543
- KR-A- 20170 121 111
- KR-B1- 101 115 314

## Description

### TECHNICAL FIELD

The present invention relates to the field of energy efficient ventilation systems for buildings, having special functionality in case of fire to improve safety.

### BACKGROUND TO THE INVENTION

According to current building regulations in most countries, a larger building shall be divided into different so-called fire cells. A fire cell is a room or a group of connected rooms within which a fire may develop but not easily propagate to other fire cells. This means that the structures that surround a fire cell, such as walls, framing of joists and so on, must have a certain predetermined resistivity against fire. Examples of fire cells are residential flats, different offices, meeting halls, care departments in hospitals and so on.

To provide surrounding structures, such as walls and framing of joists and also doors with sufficient resistivity against fire is fairly straight-forward. A more common and considerable problem is to prevent fire and fire gas propagation through the ventilation system of the building. Different more or less safe and more or less expensive ways are available to prevent or render more difficult fire and fire gas propagation through the ventilation system.

A safe way is to provide fully separate ventilation systems for each fire cell, but this solution requires a large number of bulky ventilation ducts and expensive air treatment apparatuses. Said solution is thus normally only used for buildings with only a few large fire cells. More typically, the whole or parts of the ventilation system are common for different fire cells.

In many existing buildings, fresh air is provided through vents mounted at or below the windows, whereas the stale air is removed through ventilation ducts that may rely on temperature differences for air flow or may comprise a fan. This arrangement however does not allow for easy recycling of the thermal energy present in the spent air. Therefore, increasing demands for energy-efficiency of existing buildings dictates in many cases that the original design of the ventilation system needs to be replaced by another solution providing higher energy efficiency. Given the high levels of air exchange dictated by building regulations, obtaining the desired level of energy efficiency in practice dictates recycling the thermal energy present in the stale air ventilated out using a heat exchanger.

In the case of existing buildings that are already in use, it is expensive and unpractical to install new ventilation ducts to allow heat exchange between the fresh air and the stale air.

In case of new buildings, the cost issue is also present, since installing separate ventilation ducts for both fresh air and stale air adds to building cost and reduces the amount of useful floor space.

A key issue in retrofitting a ventilation system is that fire safety must be considered, so that mandatory building regulations are fulfilled.

Thus, an object of the present invention is the provision of improved ventilation systems for retrofitting in existing buildings as well as for installation in new buildings, means and methods for such purposes, being cost-effective in terms of installation cost, yet providing improved energy efficiency and at the same time providing improved fire safety that is at least acceptable from a regulatory perspective.

A related ventilation system for a building has been disclosed in WO2017/217915.

### DEFINITIONS

The term *passive* in the context of the present disclosure indicates the absence of a powered mechanical or electronic device. In particular, it indicates the absence of a fan or similar device for induction of air flow. It indicates that the operation is entirely dependent on the pressure difference between the inlet and the outlet.

The term *inlet* means the end of an air conduit intended for air intake. Conversely, the term *outlet* means the end of an air conduit intended for the air exiting from an air conduit.

### BRIEF DESCRIPTION OF THE FIGURES

Figure 1: Schematic general representation of a building with a conventional ventilation system.
Figure 2: Schematic representation of a conventional ventilation system, top view of a floor with three separate apartments.
Figure 3: Schematic general representation of a building with ventilation system according to the present invention. Several details are not shown for clarity. For the details, please refer to Fig 7.
Figure 4: Schematic representation of a ventilation system according to the present invention, top view of a floor with three separate apartments.
Figure 5a: Fire proof air transfer unit for mounting in a wall (4) between a fire cell (3) and a stairwell (2). Side view.
Figure 5b: A butterfly damper in closed position, axial (front) view.
Figure 5c: A butterfly damper in open position, axial (front) view.
Figure 5d: A butterfly damper in open position, perspective view.
Figure 5e: A butterfly damper in open position, top view.
Figure 5f: A butterfly damper in open position, side view.
Figure 6: A flow chart of the ventilation system operation. Y means Yes, N means No.
Figure 7: A more detailed schematic representation of the ventilation system.

### SUMMARY OF THE INVENTION

The present invention provides an improved ventilation system for retrofitting in existing buildings as well as for installation in new buildings, and a fire proof air transfer unit specifically adapted for use in said system. In particular, the air transfer unit of the present invention represents a solution to the conflicting requirements of the official building code in Sweden and other countries with regard to air turnover rate demands and demands concerning fire prevention/safety. The air transfer unit solves the conflicting demands thus enabling the more cost-efficient and energy-efficient ventilation system, while satisfying all aspects of the building code.

The present invention provides a ventilation system according to claim 1, a method for operating a ventilation system according to claim 10 and a use of an air transfer unit in a ventilation system according to claim 13.

### DETAILED DESCRIPTION

### Ventilation system

In a first aspect, the present invention provides ventilation system for a building, wherein
a. said building (1) comprises:
   i. a stairwell (2);
   ii. multiple fire cells (3) separated from said stairwell (2) by one or more walls (4);
b. said ventilation system comprises
   iii. a fresh air intake to provide air supply (5);
   iv. a stale air exhaust (6);
   v. a supply fan with controllable effect (200) arranged to provide air flow for fresh air;
   vi. an exhaust fan with controllable effect (201) arranged to provide air flow for stale air;
   vii. a heat exchanger (8) arranged to exchange thermal energy between fresh air coming in from the air intake and stale air going out to the exhaust during normal operation;
   viii. a ventilation ducts (9) arranged for transferring stale air from the fire cells (3) to the stale air exhaust (6) via the heat exchanger (8);
      wherein the ventilation ducts (9) are joined at a collection box (202) comprising a collection box smoke detector (203) operatively coupled to the supply fan (200), the exhaust fan (201) and the bypass valve (204);
   ix. a bypass channel (206) joined to the ventilation duct (9), comprising an operable bypass valve (204) arranged to alternatively direct the stale air from the collection box (202) to the exhaust (6) through the heat exchanger (8) under normal operation, and from the collection box (202) through the bypass channel (206) to the exhaust (6) bypassing the heat exchanger (8) in case of triggered smoke detector (203) or (205);
   x. a ventilation duct (10) arranged for transferring fresh air from the fresh air intake (5) to the stairwell (2) via the heat exchanger (8);
   xi. stairwell evacuation duct (207) configured to provide an air duct from the top of the stairwell (2) to the stale air exhaust (6) via the exhaust fan (201), comprising a stairwell evacuation valve (208) being configured to under normal operation limit airflow from the stairwell (2) to the stale air exhaust (6), and in case of a triggered stairwell smoke detector (205), to allow air flow from the stairwell (2) to the stale air exhaust (6);
   xii. a stairwell smoke detector (205) configured to detect smoke in the stairwell (2);
   xiii. multiple fire proof air transfer units (100) arranged as conduits (105) for transferring air between the stairwell (2) and each fire cell (3), wherein said units (100) comprise a heat-sensitive trigger element (106) configured to trigger a fire proof air flow damper (107) to prevent air flow in case of substantially elevated temperature, arranged in the air conduit (105);
c. said ventilation system being configured such that:
   i. in case of fire in a fire cell, the collection box smoke detector (203) is triggered, causing the supply fan (200) and the exhaust fan (201) to be set to operate at maximum capacity and the bypass valve (204) to be operated to direct air flow through the bypass channel (206) bypassing the heat exchanger (8), thus evacuating smoke from the fire cells (3) and concomitantly increasing pressure in the stairwell (2) to prevent smoke from spreading from the fire cells (3) to the stairwell (2);
   ii. in case of hot gases flowing from a fire cell (3) to the stairwell (2), the fire proof air flow damper (107) of the air transfer unit (100) is triggered to further prevent the flow;
   iii. in case of smoke in the stairwell, the stairwell smoke detector (205) is triggered, causing the supply fan (200) and the exhaust fan (201) to be set to operate at maximum capacity, the bypass valve (204) to be operated to direct air flow through the bypass channel (206) bypassing the heat exchanger (8), and the stairwell evacuation valve (208) to be operated to fully open position thus increasing air flow from the stairwell (2) through the stairwell evacuation duct (207) to evacuate smoke therein.

The ventilation system may preferably comprise means for issuing a fire alarm remotely and/or locally in case the collection box smoke detector (203) or the stairwell smoke detector (205) is triggered.

The above system allows for a significant portion of the thermal energy present in the stale air destined to the exhaust (6) to be recovered and reused for heating (or cooling) the fresh air being taken in. Energy savings of 30-40% compared to the conventional solution discussed here can be achieved without any further modifications to the building of the ventilation system. The ventilation system of the invention however allows installation of a geothermal heating with a heat pump to further heat the fresh air, whereby savings up to 80% in energy costs can be achieved.

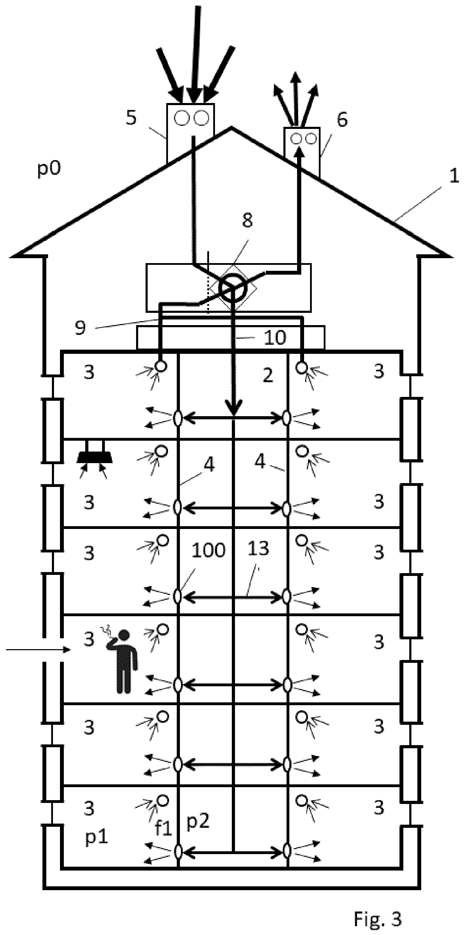

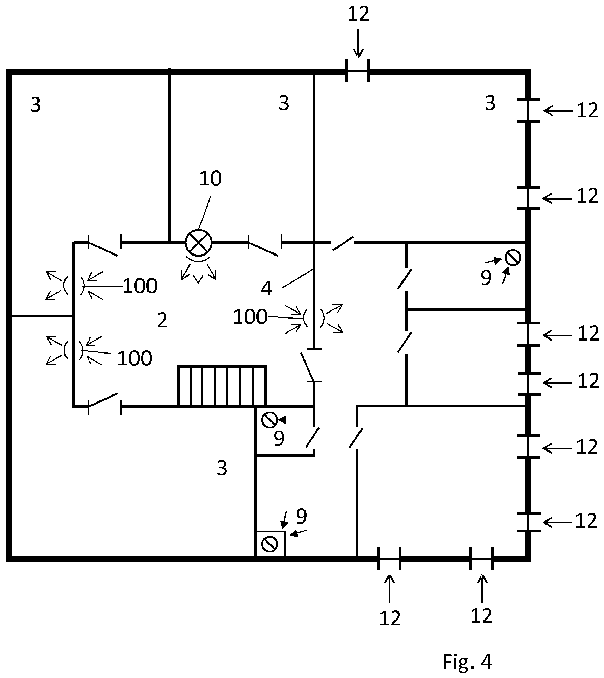

The building (1) can be any building comprising a stairwell (2) and fire cells (3) adjacent to the stairwell (2), but in preferred cases the building (1) is a residential building and the fire cells (3) are apartments having an entrance via the stairwell (2) (See Figs 3 and 4).

The fresh air intake (5) and the stale air exhaust (6) may be arranged in any conventional manner, such as at the rooftop of the building (1).

The supply fan (200) and the exhaust fan (201) in the ventilation system may be of any conventional type. The fresh air flow and the stale air flow are powered by separate fans. The effect of the fans under operation is controllable by conventional means well known in the field.

The heat exchanger (8) used in the ventilation system of the invention may be of any type well known in the art to be suitable for the purpose, such as recuperator-type heat exchangers or rotary heat exchangers. Recuperator heat exchangers have an efficiency ranging in 55-90%, depending on design and have the advantage that no contact occurs between the stale air and fresh air, and so the fresh air is not prone to fouling. Rotary heat exchangers can achieve 80% efficiency and has the capability retain air humidity which otherwise can get undesirably low in cold weather conditions. On the other hand, rotary heat exchangers are more prone to fouling.

The fire cells (3) may further be provided with passive (i.e. without powered means for inducing air flow) fresh air inlets (12) for providing flow of fresh air from the ambient outside air to the fire cell (3) without passing the heat exchanger (See Fig 4). This allows for a proportion of the fresh air to enter as ambient air, creating a subjective sensation of freshness in the fire cell (3) air for the occupants. The fresh air inlets (12) further serve to modulate the under-pressure in the fire cells (3) created by the ventilation system thus increasing comfort.

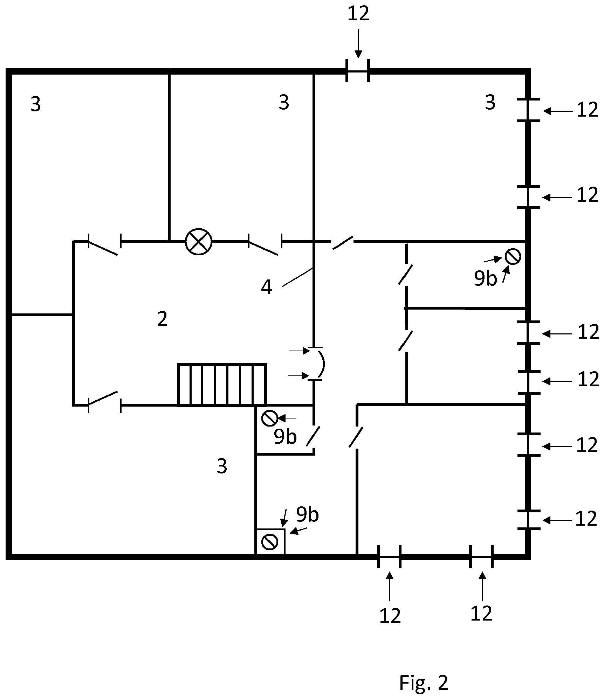

The ventilation duct (9) arranged for transferring stale air from the fire cell (3) to the stale air exhaust (6) via the heat exchanger (8) may be any conventional ventilation duct. In residential spaces, the air is typically removed through outlets in bathrooms and kitchens, since most of the odours and humidity are produced in these spaces. In the Fig 2 illustrating a conventional ventilation system, the ventilation duct for transferring stale air from the fire cell (3) to the stale air exhaust (6) is designated 9b. In contrast to the ventilation system of the present invention, the ventilation duct (9b) of the conventional system does not pass through a heat exchanger.

Ventilation ducts (9) coming from multiple fire cells (3) are joined at a collection box (202) comprising a collection box smoke detector (203). The smoke detector (203) is operatively coupled to the supply fan (200), the exhaust fan (201) and the bypass valve (204).

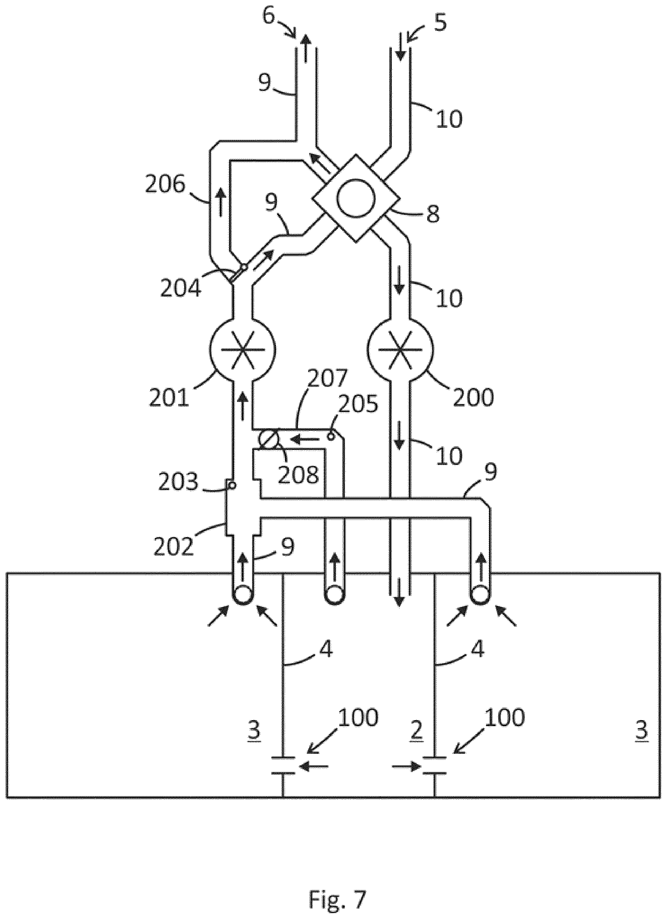

The system comprises a bypass channel (206) joined to the ventilation duct (9), comprising an operable bypass valve (204) arranged to alternatively direct the stale air from the collection box (202) to the exhaust (6) through the heat exchanger (8) under normal operation, or from the collection box (202) to the exhaust (6) bypassing the heat exchanger (8) in case of triggered smoke detector (203) or (205) (See Fig. 7).

The ventilation duct (10) is arranged for transferring fresh air from the fresh air intake (5) to the stairwell (2) via the heat exchanger (8) and may be any conventional ventilation duct.

Preferably, said ventilation duct (10) arranged for transferring fresh air comprises individual air outlets (13) arranged at more than one floor levels of the stairwell (2) to provide flow of fresh air at said floor levels. This allows for a more even distribution of fresh air in the stairwell (2) and counteracts the formation of thermal gradients in the stairwell (2).

Most preferably, the ventilation duct (10) arranged for transferring fresh air from the fresh air intake (5) to the stairwell (2) via the heat exchanger (8) comprises individual air outlets (13) arranged at each floor level of the stairwell (2) to provide flow of fresh air at each floor level, providing an ideal solution for even distribution of fresh air (See Fig 3).

The ventilation duct (10) arranged for transferring fresh air from fresh air intake (5) to the stairwell (2) via the heat exchanger (8) may be arranged in a repurposed garbage chute (See Fig 4). This allows for the system to be installed in an existing building at a minimum cost, provided that a suitable garbage chute is available.

The system comprises a stairwell evacuation duct (207) configured to provide an air duct from the top of the stairwell (2) to the stale air exhaust (6) via the exhaust fan (201). The stairwell evacuation duct in preferably connected to the system downstream of the collection box (202), so that smoke in the stairwell evacuation duct (207) will not trigger the collection box smoke detector (203) (See Fig. 7).

The system also comprises a stairwell evacuation valve (208) being configured to under normal operation limit airflow from the stairwell (2) to the stale air exhaust (6) (See Fig. 7). The flow may be completely blocked, or the valve (208) may be calibrated such that a desired basal ventilation flow is extracted from the stairwell (2). The stairwell evacuation valve is configured such that in case of a triggered stairwell smoke detector (205), it is operated to allow maximal air flow from the stairwell (2) to the stale air exhaust (6) to improve smoke evacuation from the stairwell (2). It is important that the amount of smoke in the stairwell (2) is minimized as effectively as possible, as smoke in the stairwell (2) may hinder persons from evacuating the building in case of fire, risking lives.

The stairwell smoke detector (205) is configured to detect smoke in the stairwell (2). It may be located at the top of the stairwell, or in the stairwell evacuation duct (207). If the detector (205) is located in the duct (207), the ventilation system should be configured for a sufficient basal flow through the duct (207).

The ventilation system may comprise means for issuing a fire alarm remotely and/or locally in case the collection box smoke detector (203) or the stairwell smoke detector (205) is triggered. Various alarm systems are well known in the art and widely marketed.

The system may comprise and be controlled by a computerized control unit capable of executing software for controlling the fans (200, 201), the valves (204, 208), receiving input from the smoke detectors (203, 205) and preferably means for issuing local and/or remote fire alarm. The control unit may communicate with said components using wired or wireless signalling to and from the components. The control unit software may be programmed to operate the system in accordance with the operational settings disclosed herein.

### Air transfer from stairwell to fire cell

The fire proof air transfer unit (100) arranged as a conduit for transferring air between the stairwell (2) and the fire cell (3) is typically mounted in the wall (4) separating the fire cell (3) (e.g. apartment) from the adjacent stairwell (2) (See Figs 3 and 4). Preferably, the air transfer unit (100) is an air transfer unit according to the second aspect of the present invention. The air transfer unit (100) is preferably fire proof in the sense that it fulfils the requirements of EI60S classification according to European Standard EN13501-3 to be able to resist fire for at least 60 minutes in a test according to European Standard EN1366-2.

The fire proof air transfer unit (100) is essential for the ventilation system of the present invention to comply with current building regulations from fire safety perspective. As explained in more detail below, the air transfer unit (100) comprises a heat-sensitive trigger element (106) configured to trigger an air flow damper (107) to prevent air flow in case of substantially elevated temperature, arranged in the air conduit (105). In case of fire inside the fire cell (3), the damper (107) will (after being triggered by heat) prevent the spread of smoke and fire gases from the fire cell (3) to the stairwell (2). In the more unlikely scenario of fire in the stairwell (2), the damper (107) will also reduce spread of smoke and fire into the fire cells (3).

Challenges related to compliance with fire regulations have thus far been a major hurdle for cost-effective ventilation system renovations, as well as cost effective ventilation systems for new buildings. The present invention provides a solution to this long-felt need.

### Operational settings for normal operation

The operational flows and pressures in ventilation systems are routinely adjusted by skilled operators to provide air flows satisfying regulatory demands. The adjustments are made both at the system level (fan settings and the like) and at local air terminals and vary depending on the properties of the building and the applicable regulations.

The ventilation system of the present invention is configured such that during normal operation, the air pressure (p2) in the stairwell (2) is at least 1 Pa higher, preferably 3-12 Pa higher, more preferably 3-8 Pa higher, most preferably 4-6 Pa higher than the ambient atmospheric pressure (p0). The pressure (p2) can be maintained simply by experimentally adjusting the intake flow to an appropriate amount. Alternatively, an optional pressure sensor may be operatively coupled with the intake fan to provide feedback to the fan speed to maintain a set pressure.

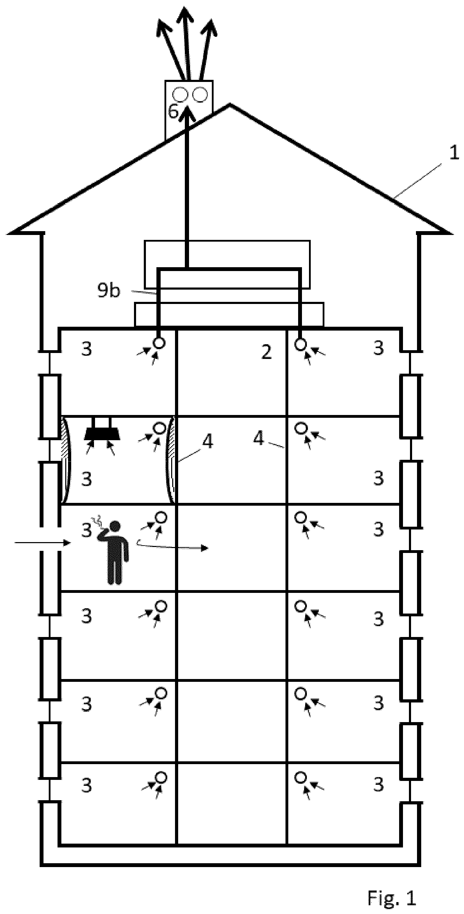

The elevated pressure ensures that stale air from the fire cells (3) does not contaminate the fresh air in the stairwell (2). The stale air in the fire cells (3) is often contaminated by smells from e.g. lavatories, cooking or smoking, so it is important for comfort to keep the stale air from spreading within the building (1). In a traditional ventilation system, the stairwell (2) has ambient atmospheric pressure or pressure below the ambient pressure, and the spread of stale air is prevented by having yet lower pressure in the fire cells (3) (e.g. apartments). However, the arrangement may easily be disrupted by the occupants of the fire cell (3) opening a window (or similar), leading to loss of under-pressure in the fire cell (3) allowing stale air and smells to escape to other spaces such as the stairwell (2). In Figure 1, a situation is illustrated where a smoker (human figure) in one of the apartments in a building having conventional ventilation has opened a window, leading to air flows as indicated by the arrows within the same apartment. Some of the smoke contaminates the air in the stairwell. Figure 1 also illustrates the situation (in the apartment immediately above the smoker), where cooking is taking place. There is under-pressure created by a boosted ventilation during cooking illustrated by the walls bulging inwards. If the window were to be opened in the apartment, the under-pressure would be eliminated allowing smells to escape to the stairwell (2). Note that as illustrated in Fig 3, in a building equipped with the inventive ventilation system, the situation with a smoker opening an apartment window would not lead to any airflow to the stairwell, as indicated by arrows.

The ventilation system is preferably configured such that during normal operation, the air pressure (p1) in the fire cell (3) is 5-15 Pa, more preferably 7-13 Pa, yet more preferably 8-12 Pa, most preferably 9-11 Pa below the pressure (p2) in the stairwell (2), to ensure sufficient airflow (f1) from the stairwell (2) through the air transfer unit (100) to the fire cell (3).

The ventilation system is configured such that during normal operation, the air pressure (p1) in the fire cell (3) is at least 1 Pa, preferably at least 2 Pa, most preferably 4-6 Pa lower than ambient atmospheric (p0). This ensures that moist air from the fire cells (3) does not migrate through any gaps, cracks or holes that are unavoidably present in the outer walls, which would carry the risk of condensation within the structures during cold weather, with potential damage to the building including rotting and mold growth. The fire cell (3) pressure (p1) is preferably less than 10 Pa lower than the ambient atmospheric, as too high pressure differentials could lead to undesirable amount of air leakage.

The ventilation system is configured such that during normal operation, a fresh air flow (f1) corresponding to at least 40%, preferably at least 60%, more preferably at least 70%, most preferably 75-85% of the flow of stale air withdrawn by the ventilation system from the fire cell (3) is provided to the fire cell (3) from the stairwell (2) via the air transfer unit (100). The higher the proportion of air provided by through the air transfer unit (100), the higher the thermal efficiency. However, in practice at least 15% of the air provided should enter through other channels, such as windows, air inlets (13) and the like to create a sensation of freshness in the air thus increasing comfort.

### Operational settings in case of fire

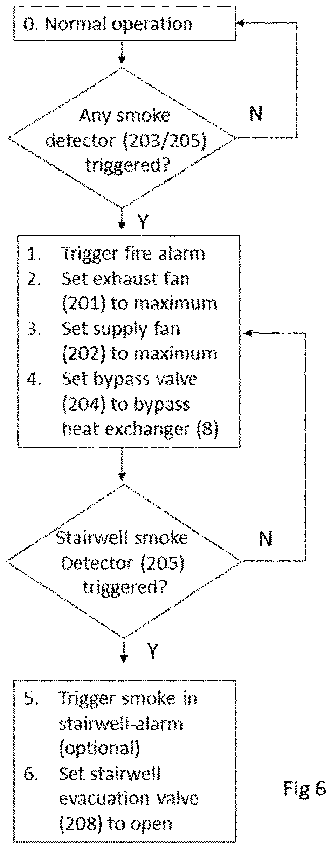

In case of fire in the building, several operational changes take place in the system (see Fig 6 for a flow-chart illustration of the operational steps). The operational steps in case of fire depend on if the smoke (i.e. fire) is in a fire cell (3) in the stairwell (2), or both.

A key priority is to minimize smoke in the stairwell (2). It is also a priority to provide maximal air exchange to the building. Although it may appear counterintuitive, insufficient oxygen during a building fire is generally undesirable, as it increases the risk of highly toxic gas formation and the risk of fire gas explosion.

Thus, in case of fire in a fire cell (3), the collection box smoke detector (203) is triggered, causing the supply fan (200) and the exhaust fan (201) to be set to operate at maximum capacity. This allows for the most efficient smoke evacuation possible, while concomitantly increasing pressure in the stairwell (2) to prevent smoke from spreading from the fire cells (3) to the stairwell (2).

The bypass valve (204) is caused to be operated to direct air flow through the bypass channel (206) bypassing the heat exchanger (8). This is necessary, since heat exchangers are typically made of non-fire proof materials such as aluminium. Hot gases from a fire can easily damage and even melt the heat exchanger, whereby the exhaust air containing smoke could become mixed with the fresh air, which is completely unacceptable, as it would lead to spreading smoke throughout the building, risking the health and lives of the occupants.

An important effect of maximizing the air flow to the fire cells (3) in case of fire is that the risk of fire gas explosion is substantially reduced. If the ventilation is insufficient, hot gases containing evaporated flammable components will fill the space containing the fire. Although highly flammable and hot, due to insufficient oxygen, the flammable gas mixture does not immediately burn. At some point, sooner or later, the heat of the fire is likely to cause windows or the door of the fire cell (3) to break, providing a sudden influx of oxygen, causing the evaporated flammable components to burn explosively in a so-called a fire gas explosion. Such explosions are obviously hazardous to any persons in the vicinity, such as occupants that have not been able to evacuate, or fire fighters responding to the fire. Additionally, they may cause structural damage and/or collapse of the building and/or may greatly speed the spread the fire further in the building. The present system greatly reduces the risk of such explosions by evacuating a substantial fraction of the gases from the fire cell (3) via the ventilation system, so that they do not accumulate in the space containing the fire. In all but most extreme situations, the ventilation system is sufficient to prevent the flammable fire gases from reaching an explosive concentration and temperature.

If a fire in a fire cell (3) gets sufficiently hot, the heat and gases produced by the fire may expand at a rate that can no longer be accommodated by the exhaust ventilation system. In such cases, the hot gases from the fire will seek to enter the stairwell through the air transfer units (100), which must be prevented at all costs, to allow safe evacuation of the building occupants. In the inventive system, in case of hot gases flowing from a fire cell (3) to the stairwell (2), the fire proof air flow damper (107) of the air transfer unit (100) is automatically triggered to prevent the flow.

In case of smoke (or fire) in the stairwell, the stairwell smoke detector (205) is triggered, causing the supply fan (200) and the exhaust fan (201) to be set to operate at maximum capacity, to maximize smoke and fire gas evacuation and to prevent the situation where insufficient oxygen causes the formation of an explosive gas mixture. Concomitantly, the bypass valve (204) is caused to be operated to direct air flow through the bypass channel (206) bypassing the heat exchanger (8), to prevent damage to the heat exchanger (8) as discussed above. Further concomitantly, the stairwell evacuation valve (208) is caused to be operated to fully open position substantially increasing air flow from the stair well through the stairwell evacuation duct (207) to evacuate smoke therein. It is to be noted that in case of smoke/fire in BOTH a fire cell (3) and the stairwell (2), the system reacts in identical fashion as with fire in the stairwell (2) only, since keeping the air in the stairwell is of higher priority to facilitate safe evacuation of the occupants of the building.

### Method for operation of the ventilation system

In an aspect of the invention, there is provided a method for operating a ventilation system (see Fig 6) according to the first aspect to evacuate smoke from the building in case of fire, wherein:
i. in case of fire in a fire cell, the collection box smoke detector (203) is triggered;
   whereby the supply fan (200) and the exhaust fan (201) is set to operate at maximum capacity; and
   the bypass valve (204) is operated to direct air flow through the bypass channel (206) bypassing the heat exchanger (8),
   thus evacuating smoke from the fire cells (3) and concomitantly increasing pressure in the stairwell (2) to prevent smoke from spreading from the fire cells (3) to the stairwell (2); and
ii. in case of smoke in the stairwell, the stairwell smoke detector (205) is triggered;
   whereby the supply fan (200) and the exhaust fan (201) are set to operate at maximum capacity;
   the bypass valve (204) is operated to direct air flow through the bypass channel (206) bypassing the heat exchanger (8); and
   the stairwell evacuation valve (204) is operated to fully open position, thus increasing air flow from the stairwell (2) through the stairwell evacuation duct (207) to evacuate smoke therein.

The operations are preferably executed by a software run on a computerized control unit capable of executing software for controlling the fans (200, 201), the valves (204, 208), receiving input from the smoke detectors (203, 205) and preferably means for issuing local and/or remote fire alarm. The software may execute an algorithm according to the flow chart in Fig 6. The method may also comprise issuing a fire alarm locally or remotely, preferably containing information on the location of the fire (stairwell or fire cell).

### Air transfer unit

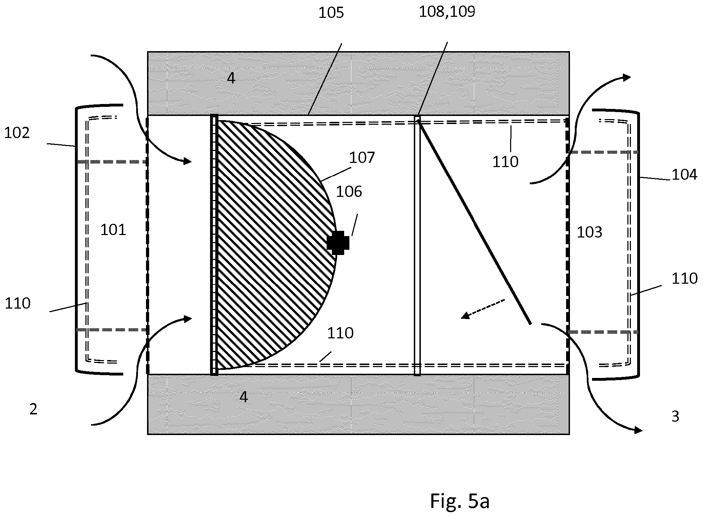

In a second aspect, there is provided a fire proof air transfer unit (100) comprising (see Fig 5a):
a. inlet terminal (101) comprising a protective vent cover (102);
b. outlet terminal (103) comprising a protective vent cover (104);
c. an air conduit (105) arranged to provide passage for flowing air from the inlet terminal (101) to the outlet terminal (103);
   wherein the unit (100) comprises a heat-sensitive trigger element (106) configured to trigger a fire proof air flow damper (107) to prevent air flow in case of substantially elevated temperature, arranged in the air conduit (105),
   and wherein the unit (100) does not comprise powered means for forcing air flow (such as a fan).

The inlet and outlet terminals (101,103) may be of any conventional design for air transfer units (100).

The conduit (105) may be of any conventional design for ventilation conduits of a size suitable for the application. The length of the conduit is dictated by the thickness of the wall (4) into which the unit is intended to be mounted, preferably 15-50 cm. The conduit (105) may have any shape as long it allows sufficient air flow in the conduit but is preferably circular having diameter of 10-30 cm or rectangular with a cross-sectional area of 100-400 cm².

By substantially elevated temperature in this context is meant a temperature indicative of a fire, i.e. exceeding 45°C, preferably 50-80°C, most preferably 50-60°C or about 72°C.

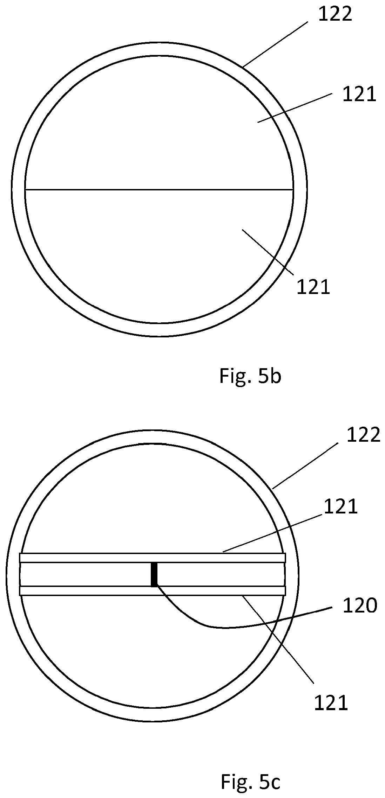

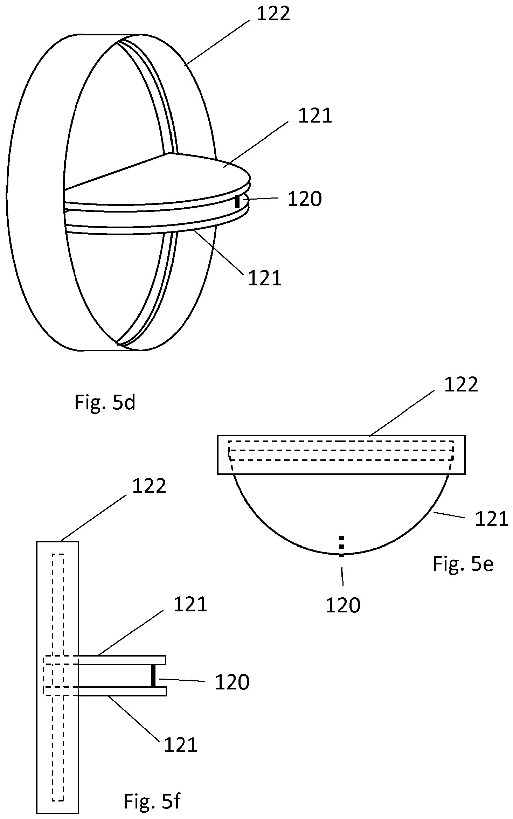

The heat sensitive trigger element (106) may be implemented in many ways already known in the art. A preferred implementation is a bimetallic clip (120) that changes shape when the temperature exceeds the designated set-point. The bimetallic clip (120) is set up to hold a pair of fireproof butterfly dampers (121) at an open position. The butterfly dampers (121) are configured to block the airflow once the dampers (121) are released by the shape change in the bimetallic clip brought about by increased temperature. A preferred implementation is a butterfly-configuration illustrated in Figs 5b-5e. The dual butterfly wings of the damper (121) are movably attached to a frame (122) by a hinge mechanism (not shown) comprising a spring (not shown) capable of powering movement of the dual butterfly wings (121) from the open position (Fig 5c, 5d, 5e, 5f) to the closed position (Fig 5c), once the bimetallic clip (120) is released.

The damper (107) is fire proof in the sense that it fulfils the regulatory demands for installation in a ventilation duct between fire cells. The specific manner of determining fire proof ratings varies between jurisdictions and in different applications. It is preferred that the damper fulfils the requirements of EI60S classification according to European Standard EN13501-3 to be able to resist fire for at least 60 minutes in a test according to European Standard EN1366-2. Such components are readily commercially available.

An exemplary suitable damper is ABC-SC60 by ABC Ventilationsprodukter AB, Sweden. Another example is a device designated FDE produced by Halton. Yet another suitable damper is SC+60 from Rf Technologies NV. This type of damper is advantageous in that it works well even in applications where the air pressure differential is low, which is generally the case with a ventilation system of the first aspect. It also requires little to no maintenance.

The unit (100) may further comprise a device for preventing back flow (108) from the outlet terminal (103) to the inlet terminal (101). As shown in Fig 5a, the device for preventing back flow (108) from the outlet terminal (103) to the inlet terminal (101) may comprise a unidirectional valve (109). In Fig 5a, the device (108) comprises a hinged flap that, in absence of air flow or in case of air flow from the outlet (103) to the inlet (101), tends to return to closed position as illustrated by the thatched arrow by force of gravity. Devices for preventing back flow in a ventilation system are well known and found on the market.

The device for preventing back flow (108) has the added advantage that spread of stale air (potentially, including smoke) from the fire cells (3) to the stairwell (2) is prevented in case of ventilation failure, e.g. fan failure or power outage.

The heat-sensitive trigger element (105) may be configured to trigger the air flow damper (107) at temperatures exceeding 45°C, preferably 50°C, more preferably 52°C.

Preferably, the conduit (105) and/or the terminal (101,103) is/are provided with lining (110) comprising a sound dampening material. This will reduce the level of noise travelling between the fire cells and the stairwell. In certain circumstances there are regulatory demands on soundproofing, and in such cases the sound dampening material may be mandatory. The dampening material may be any material commonly used for such purposes, such as rubber or foamed plastics.

The air transfer unit (100) may be mounted in a wall (4) between two spaces in a building, preferably a wall (4) between a fire cell (3) and a stairwell (2).

### Uses of air transfer unit

In a third aspect, there is provided a use of an air transfer unit (100) according to the second aspect, in a ventilation system where fresh air is provided into a fire cell (3) through a stairwell (2), wherein said unit (100) is arranged in a wall (4) between the stairwell (2) and the fire cell (3), and wherein the ventilation system is according to the first aspect.

### General aspects relevant to present disclosure

The term "comprising" is to be interpreted as including, but not being limited to. The arrangement of the present disclosure into sections with headings and subheadings is merely to improve legibility and is not to be interpreted limiting in any way, in particular, the division does not in any way preclude or limit combining features under different headings and subheadings with each other.

## Claims

1. A ventilation system for a building (1), wherein
a. said building (1) comprises:
i. a stairwell (2);
ii. multiple fire cells (3) separated from said stairwell (2) by one or more walls (4);
b. said ventilation system comprises
iii. a fresh air intake to provide air supply (5);
iv. a stale air exhaust (6);
v. a supply fan with controllable effect (200) arranged to provide air flow for fresh air;
vi. an exhaust fan with controllable effect (201) arranged to provide air flow for stale air;
vii. a heat exchanger (8) arranged to exchange thermal energy between fresh air coming in from the air intake and stale air going out to the exhaust during normal operation;
viii. a ventilation ducts (9) arranged for transferring stale air from the fire cells (3) to the stale air exhaust (6) via the heat exchanger (8);
wherein the ventilation ducts (9) are joined at a collection box (202) comprising a collection box smoke detector (203) operatively coupled to the supply fan (200), the exhaust fan (201) and a bypass valve (204);
ix. bypass channel (206) joined to the ventilation duct (9), comprising an operable bypass valve (204) arranged to alternatively direct the stale air from the collection box (202) to the exhaust (6) through the heat exchanger (8) under normal operation, and from the collection box (202) through the bypass channel (206) to the exhaust (6) bypassing the heat exchanger (8) in case of triggered smoke detector (203) or (205);
x. a ventilation duct (10) arranged for transferring fresh air from the fresh air intake (5) to the stairwell (2) via the heat exchanger (8);
xi. stairwell evacuation duct (207) configured to provide an air duct from the top of the stairwell (2) to the stale air exhaust (6) via the exhaust fan (201), comprising a stairwell evacuation valve (208) being configured to under normal operation limit airflow from the stairwell (2) to the stale air exhaust (6), and in case of a triggered stairwell smoke detector (205), to allow air flow from the stairwell (2) to the stale air exhaust (6);
xii. a stairwell smoke detector (205) configured to detect smoke in the stairwell (2);
xiii. multiple fire proof air transfer units (100) arranged as conduits (105) for transferring air between the stairwell (2) and each fire cell (3), wherein said units (100) comprise a heat-sensitive trigger element (106) configured to trigger a fire proof air flow damper (107) to prevent air flow in case of substantially elevated temperature, arranged in the air conduit (105);
c. said ventilation system being configured such that:
i. in case of fire in a fire cell, the collection box smoke detector (203) is triggered, causing the supply fan (200) and the exhaust fan (201) to be set to operate at maximum capacity and the bypass valve (204) to be operated to direct air flow through the bypass channel (206) bypassing the heat exchanger (8), thus evacuating smoke from the fire cells (3) and concomitantly increasing pressure in the stairwell (2) to prevent smoke from spreading from the fire cells (3) to the stairwell (2);
ii. in case of hot gases flowing from a fire cell (3) to the stairwell (2), the fire proof air flow damper (107) of the air transfer unit (100) is triggered to further prevent the flow;
iii. in case of smoke in the stairwell, the stairwell smoke detector (205) is triggered, causing the supply fan (200) and the exhaust fan (201) to be set to operate at maximum capacity, the bypass valve (204) to be operated to direct air flow through the bypass channel (206) bypassing the heat exchanger (8), and the stairwell evacuation valve (208) to be operated to fully open position thus increasing air flow from the stairwell (2) through the stairwell evacuation duct (207) to evacuate smoke therein.

2. The ventilation system according to any of the preceding claims, comprising means for issuing a fire alarm remotely and/or locally in case the collection box smoke detector (203) or the stairwell smoke detector (205) is triggered.

3. The ventilation system according to any of the preceding claims, wherein the air transfer units (100) further comprise a device for preventing back flow (108) from the outlet terminal (103) to the inlet terminal (101).

4. The ventilation system according to any of the preceding claims, wherein the heat-sensitive trigger element (106) is configured to trigger the air flow damper (107) at temperatures exceeding 45°C.

5. The ventilation system according to any of the preceding claims, wherein the heat-sensitive trigger element (106) is configured to trigger the air flow damper (107) at temperatures exceeding 72°C.

6. The ventilation system according to any of the preceding claims, wherein the stairwell smoke detector (205) is located at the stairwell evacuation duct (207), and the stairwell evacuation valve (208) is configured under normal operation to allow minor airflow sufficient for the stairwell smoke detector (205) to detect smoke in the stairwell (2).

7. The ventilation system according to claim 8, wherein the stairwell evacuation duct (207) is configured such that the air from the stairwell (2) flows through the heat exchanger (8) to the stale air exhaust (6) under normal operation.

8. The ventilation system according to any of the preceding claims, wherein the fire cell (3) is provided with a passive fresh air inlet (12) for providing flow of fresh air from the ambient outside air to the fire cell (3) without passing the heat exchanger (8).

9. The ventilation system according to any of the preceding claims, wherein the ventilation duct (10) arranged for transferring fresh air from the fresh air intake (5) to the stairwell (2) via the heat exchanger (8) comprises individual air outlets (13) arranged at more than one floor levels of the stairwell (2) to provide flow of fresh air at said floor levels.

10. A method for operating a ventilation system according to any of the preceding claims to evacuate smoke from the building in case of fire, wherein:
i. in case of fire in a fire cell, the collection box smoke detector (203) is triggered;
whereby the supply fan (200) and the exhaust fan (201) is set to operate at maximum capacity; and
the bypass valve (204) is operated to direct air flow through the bypass channel (206) bypassing the heat exchanger (8),
thus evacuating smoke from the fire cells (3) and concomitantly increasing pressure in the stairwell (2) to prevent smoke from spreading from the fire cells (3) to the stairwell (2); and
ii. in case of smoke in the stairwell, the stairwell smoke detector (205) is triggered;
whereby the supply fan (200) and the exhaust fan (201) are set to operate at maximum capacity;
the bypass valve (204) is operated to direct air flow through the bypass channel (206) bypassing the heat exchanger (8); and
the stairwell evacuation valve (208) is operated to fully open position, thus increasing air flow from the stairwell (2) through the stairwell evacuation duct (207) to evacuate smoke therein.

11. The method according to claim 11, further comprising issuing a fire alarm locally or remotely, preferably containing information on the location of the fire

12. The method according to claim 10 or 11, wherein operations are executed by a software run on a computerized control unit capable of executing software for controlling the fans (200, 201), the valves (204, 208), receiving input from the smoke detectors (203, 205) and preferably means for issuing local and/or remote fire alarm.

13. A use of an air transfer unit (100) comprising:
a. inlet terminal (101) comprising a protective vent cover (102);
b. outlet terminal (103) comprising a protective vent cover (104);
c. an air conduit (105) arranged to provide passage for flowing air from the inlet terminal (101) to the outlet terminal (103);
**characterized in that** the unit (100) comprises a heat-sensitive trigger element (106) configured to trigger a fire proof air flow damper (107) to prevent air flow in case of substantially elevated temperature indicative of a fire, arranged in the air conduit (105),
and **in that** the unit (100) does not comprise powered means for forcing air flow,
in a ventilation system where fresh air is provided into a fire cell (3) through a stairwell (2), wherein said unit (100) is arranged in a wall (4) between the stairwell (2) and the fire cell (3),
wherein the ventilation system is according to any of claims 1-9.

14. The use according to claim 13, wherein the substantially elevated temperature is a temperature exceeding 45°C.

## Patentansprüche

1. Belüftungssystem für ein Gebäude (1), wobei
a. das Gebäude (1)umfasst:
i. ein Treppenhaus (2);
ii. mehrere Brandzellen (3), die von dem Treppenhaus (2) durch eine oder mehrere Wände (4) getrennt sind;
b. das Belüftungssystem umfasst:
iii. einen Frischlufteinlass zum Bereitstellen einer Luftzufuhr (5);
iv. einen Auslass (6) für verbrauchte Luft;
v. einen Zufuhrventilator mit steuerbarer Wirkung (200), angeordnet zum Bereitstellen eines Luftstroms für Frischluft;
vi. einen Abluftventilator mit steuerbarer Wirkung (201), angeordnet zum Bereitstellen eines Luftstroms für verbrauchte Luft;
vii. einen Wärmetauscher (8), angeordnet zum Austauschen von Wärmeenergie zwischen Frischluft, die von dem Lufteinlass eingeht, und verbrauchter Luft, die zu dem Auslass ausgeht, im Normalbetrieb;
viii. ein Belüftungskanäle (9), angeordnet zum Übertragen von verbrauchter Luft von den Brandzellen (3) zu dem Auslass (6) für verbrauchte Luft über den Wärmetauscher (8); wobei die Belüftungskanäle (9) an einer Sammelbox (202) zusammengeführt sind, die einen Sammelbox-Rauchmelder (203) umfasst, der mit dem Zufuhrventilator (200), dem Abluftventilator (201) und einem Umgehungsventil (204) wirkverbunden ist;
ix. einen Umgehungskanal (206), verbunden mit dem Belüftungskanal (9), umfassend ein betriebsfähiges Umgehungsventil (204), das dafür angeordnet ist, alternativ im Normalbetrieb die verbrauchte Luft von der Sammelbox (202) zu dem Auslass (6) durch den Wärmetauscher (8) zu leiten und im Fall eines ausgelösten Rauchmelders (203) oder (205) von der Sammelbox (202) durch den Umgehungskanal (206) zu dem Auslass (6), wobei der Wärmetauscher (8) umgangen wird;
x. einen Belüftungskanal (1), angeordnet zu Übertragen von Frischluft von dem Frischlufteinlass (5) zu dem Treppenhaus (2) über den Wärmetauscher (8);
xi. Treppenhaus-Abzugskanal (207), konfiguriert zum Bereitstellen eines Luftkanals vom oberen Bereich des Treppenhausees (2) zu dem Auslass (6) für verbrauchte Luft über den Abluftventilator (201), umfassend ein Treppenhaus-Abzugsventil (208), das dafür konfiguriert ist, im Normalbetrieb den Luftstrom von dem Treppenhaus (2) zu dem Auslass (6) für verbrauchte Luft zu begrenzen und im Fall eines ausgelösten Treppenhaus-Rauchmelders (205) einen Luftstrom von dem Treppenhaus (2) zu dem Auslass (6) für verbrauchte Luft zu gestatten;
xii. einen Treppenhaus-Rauchmelder (205), konfiguriert zum Erfassen von Rauch in dem Treppenhaus (2);
xiii. mehrere feuersichere Luftübertragungseinheiten (100), angeordnet als Leitungen (105) zum Übertragen von Luft zwischen dem Treppenhaus (2) und jeder Brandzelle (3), wobei die Einheiten (100) ein wärmeempfindliches Auslöseelement (106) umfassen, konfiguriert zum Auslösen eines feuersicheren Luftstromdämpfers (107) zum Verhindern eines Luftstroms im Fall einer im Wesentlichen erhöhten Temperatur, angeordnet in der Luftleitung (105);
c. wobei das Belüftungssystem derart konfiguriert ist, dass:
i. im Fall eines Brandes in einer Brandzelle der Sammelbox-Rauchmelder (203) ausgelöst wird, wodurch bewirkt wird, dass der Zufuhrventilator (200) und der Abluftventilator (201) darauf eingestellt werden, mit maximaler Kapazität betrieben zu werden, und das Umgehungsventil (204) derart betrieben wird, dass es den Luftstrom durch den Umgehungskanal (206) leitet, wobei der Wärmetauscher (8) umgangen wird, sodass Rauch aus den Brandzellen (3) abgezogen wird und damit einhergehend der Druck im Treppenhaus (2) erhöht wird, um zu verhindern, dass sich Rauch von den Brandzellen (3) in das Treppenhaus (2) ausbreitet;
ii. im Fall von heißen Gasen, die von einer Brandzelle (3) zum Treppenhaus (2) strömen, der feuersichere Luftstromdämpfer (107) der Luftübertragungseinheit (100) ausgelöst wird, um einen weiteren Strom zu verhindern;
iii. im Fall von Rauch im Treppenhaus der Treppenhaus-Rauchmelder (205) ausgelöst wird, wodurch bewirkt wird, dass der Zufuhrventilator (200) und der Abluftventilator (201) darauf eingestellt werden, mit maximaler Kapazität betrieben zu werden, das Umgehungsventil (204) derart betrieben wird, dass es den Luftstrom durch den Umgehungskanal (206) leitet, wobei der Wärmetauscher (8) umgangen wird, und das Treppenhaus-Abzugsventil (208) derart betrieben wird, dass es in die vollständig offene Position schaltet, sodass der Luftstrom von dem Treppenhaus (2) durch den Treppenhaus-Abzugskanal (207) erhöht wird, um Rauch darin abzuziehen.

2. Belüftungssystem nach einem der vorstehenden Ansprüche, umfassend Mittel zum Ausgeben eines Fern- und/oder lokalen Feueralarms, wenn der Sammelbox-Rauchmelder (203) oder der Treppenhaus-Rauchmelder (205) ausgelöst wird.

3. Belüftungssystem nach einem der vorstehenden Ansprüche, wobei die Luftübertragungseinheiten (100) ferner eine Vorrichtung zum Verhindern einer Rückströmung (108) von der Auslassendstelle (103) zu der Einlassendstelle (101) umfassen.

4. Belüftungssystem nach einem der vorstehenden Ansprüche, wobei das wärmeempfindliche Auslöseelement (106) dafür konfiguriert ist, den Luftstromdämpfer (107) bei Temperaturen von über 45 °C auszulösen.

5. Belüftungssystem nach einem der vorstehenden Ansprüche, wobei das wärmeempfindliche Auslöseelement (106) dafür konfiguriert ist, den Luftstromdämpfer (107) bei Temperaturen von über 72 °C auszulösen.

6. Belüftungssystem nach einem der vorstehenden Ansprüche, wobei sich der Treppenhaus-Rauchmelder (205) an dem Treppenhaus-Abzugskanal (207) befindet und das Treppenhaus-Abzugsventil (208) dafür konfiguriert ist, im Normalbetrieb einen geringen Luftstrom zu gestatten, der für den Treppenhaus-Rauchmelder (205) zum Erfassen von Rauch in dem Treppenhaus (2) ausreichend ist.

7. Belüftungssystem nach Anspruch 8, wobei der Treppenhaus-Abzugskanal (207) derart konfiguriert ist, dass im Normalbetrieb die Luft aus dem Treppenhaus (2) durch den Wärmetauscher (8) zu dem Auslass (6) für verbrauchte Luft strömt.

8. Belüftungssystem nach einem der vorstehenden Ansprüche, wobei die Brandzelle (3) mit einem passiven Frischlufteinlass (12) zum Bereitstellen eines Frischluftstroms aus der Umgebungsaußenluft zu der Brandzelle (3) ohne Durchlaufen des Wärmetauschers (8) versehen ist.

9. Belüftungssystem nach einem der vorstehenden Ansprüche, wobei der Belüftungskanal (10), der zum Übertragen von Frischluft von dem Frischlufteinlass (5) zu dem Treppenhaus (2) über den Wärmetauscher (8) angeordnet ist, individuelle Luftauslässe (13) umfasst, die auf mehr als einer Stockwerkebene des Treppenhauses (2) angeordnet sind, um einen Frischluftstrom auf den Stockwerkebenen bereitzustellen.

10. Verfahren zum Betreiben eines Belüftungssystem nach einem der vorstehenden Ansprüche zum Abziehen von Rauch aus dem Gebäude im Fall eines Brandes, wobei:
i. im Fall eines Brandes in einer Brandzelle der Sammelbox-Rauchmelder (208) ausgelöst wird; wodurch der Zufuhrventilator (200) und der Abluftventilator (201) darauf eingestellt werden, mit maximaler Kapazität betrieben zu werden; und das Umgehungsventil (204) derart betrieben wird, dass es den Luftstrom durch den Umgehungskanal (206) leitet, wobei der Wärmetauscher (8) umgangen wird,
sodass Rauch aus den Brandzellen (3) abgezogen wird und damit einhergehend der Druck im Treppenhaus (2) erhöht wird, um zu verhindern, dass sich Rauch von den Brandzellen (3) in das Treppenhaus (2) ausbreitet; und
ii. im Fall von Rauch im Treppenhaus der Treppenhaus-Rauchmelder (205) ausgelöst wird; wodurch der Zufuhrventilator (200) und der Abluftventilator (201) darauf eingestellt werden, mit maximaler Kapazität betrieben zu werden; das Umgehungsventil (204) derart betrieben wird, dass es den Luftstrom durch den Umgehungskanal (206) leitet, wobei der Wärmetauscher (8) umgangen wird; und
das Treppenhaus-Abzugsventil (208) derart betrieben wird, dass es in die vollständig offene Position schaltet, sodass der Luftstrom von dem Treppenhaus (2) durch den Treppenhaus-Abzugskanal (207) erhöht wird, um Rauch darin abzuziehen.

11. Verfahren nach Anspruch 11, ferner umfassend Ausgeben eines lokalen oder Fern-Feueralarms, der vorzugsweise Informationen über den Ort des Brandes enthält.

12. Verfahren nach Anspruch 10 oder 11, wobei Vorgänge von einer Software durchgeführt werden, die auf einer computerisierten Steuereinheit ausgeführt wird, die in der Lage ist, eine Software zum Steuern der Ventilatoren (200, 201), der Ventile (204, 208), zum Empfangen von Eingängen von den Rauchmeldern (203, 205) und vorzugsweise Mitteln zum Ausgeben eines lokalen und/oder Fern-Feueralarms auszuführen.

13. Verwendung einer Luftübertragungseinheit (100), umfassend:
a. eine Einlassendstelle (101), die eine Schutzlüftungsabdeckung (102) umfasst;
b. eine Auslassendstelle (103), die eine Schutzlüftungsabdeckung (104) umfasst;
c. eine Luftleitung (105), angeordnet zum Bereitstellen eines Durchlaufs für strömende Luft von der Einlassendstelle (101) zu der Auslassendstelle (103); **dadurch gekennzeichnet, dass** die Einheit (100) ein wärmeempfindliches Auslöseelement (106), umfasst, das dafür konfiguriert ist, einen feuersicheren Luftstromdämpfer (107) auszulösen, um einen Luftstrom im Fall einer im Wesentlichen erhöhten Temperatur zu verhindern, die auf einen Brand hinweist, angeordnet in der Luftleitung (105),
und dadurch, dass die Einheit (100) keine angetriebenen Mittel zum Zwingen eines Luftstroms umfasst,
in einem Belüftungssystem, in dem Frischluft in eine Brandzelle (3) durch ein Treppenhaus (2) bereitgestellt wird, wobei die Einheit (100) in einer Wand (4) zwischen dem Treppenhaus (2) und der Brandzelle (3) angeordnet ist, wobei das Belüftungssystem nach einem der Ansprüche 1-9 ist.

14. Verwendung nach Anspruch 13, wobei die im Wesentlichen erhöhte Temperatur eine Temperatur von über 45 °C ist.

## Revendications

1. Système de ventilation pour un bâtiment (1), dans lequel
a. ledit bâtiment (1) comprend :
i. une cage d'escalier (2) ;
ii. plusieurs compartiments anti-incendie (3) séparés de ladite cage d'escalier (2) par au moins une paroi (4) ;
b. ledit système de ventilation comprend :
iii. une prise d'air frais pour fournir d'un approvisionnement d'air (5) ;
iv. un échappement d'air vicié (6) ;
v. un ventilateur d'alimentation à effet contrôlable (200) aménagé pour fournir un débit d'air frais ;
vi. un ventilateur d'échappement à effet contrôlable (201) aménagé pour fournir un débit d'air vicié ;
vii. un échangeur thermique (8) aménagé pour échanger de l'énergie thermique entre l'air frais en provenance de la prise d'air frais et l'air vicié sortant de l'échappement en fonctionnement normal ;
viii. des conduits de ventilation (9) aménagés pour transférer de l'air vicié des compartiments anti-incendie (3) vers l'échappement d'air vicié (6) via l'échangeur thermique (8) ;
dans lequel les conduits de ventilation (9) sont joints au niveau d'une boîte de collecte (202) contenant un détecteur de fumée de boîte de collecte (203) couplé fonctionnellement au ventilateur d'alimentation (200), à l'échappement (201) et à une soupape de dérivation (204) ;
ix. un conduit de dérivation (206) joint au conduit de ventilation (9), comprenant une soupape de dérivation actionnable (204) aménagée pour diriger alternativement l'air vicié depuis la boîte de collecte (202) à l'échappement (6) à travers l'échangeur de chaleur (8) en fonctionnement normal, et depuis la boîte de collecte (202) à travers le conduit de dérivation (206) à l'échappement (6) en court-circuitant l'échangeur de chaleur (8) en cas de déclenchement du détecteur de fumée (203) ou (205) ;
x. un conduit de ventilation (10) aménagé pour transférer de l'air frais de la prise d'air frais (5) vers la cage d'escalier (2) via l'échangeur thermique (8) ;
xi. un conduit d'évacuation de la cage d'escalier (207) conçu pour fournir un conduit d'air depuis le haut de la cage d'escalier (2) vers l'échappement d'air vicié (6) via le ventilateur d'échappement (201), comprenant une soupape d'évacuation de la cage d'escalier (208) configurée pour, en fonctionnement normal, limiter le débit d'air de la cage d'escalier (2) à l'échappement d'air vicié (6), et en cas de déclenchement d'un détecteur de fumée de la cage d'escalier (205), pour permettre un débit d'air depuis la cage d'escalier (2) à l'échappement d'air vicié (6).
xii. un détecteur de fumée de cage d'escalier (205) conçu pour détecter de la fumée dans la cage d'escalier (2) ;
xiii. plusieurs unités de transfert d'air anti-incendie (100) conçues sous forme de conduits (105) destinés à transférer de l'air entre la cage d'escalier (2) et chaque compartiment anti-incendie (3),
chacune desdites unités (100) comprenant un élément de déclenchement sensible à la chaleur (106) conçu pour déclencher un régulateur de débit d'air anti-incendie (107) pour empêcher l'écoulement d'air en cas de température substantiellement élevée, disposé dans le conduit d'air (105) ;
c. ledit système de ventilation étant conçu de façon à :
i. en cas d'incendie dans un compartiment anti-incendie, le détecteur de fumée de boîte de collecte (203) est déclenché, ce qui amène le ventilateur d'alimentation (200) et le ventilateur d'échappement (201) à se régler à fonctionner au maximum de leur capacité et la soupape de dérivation (204) à être actionnée pour orienter le débit d'air à travers le conduit de dérivation (206) en court-circuitant l'échangeur de chaleur (8), évacuant ainsi la fumée des compartiment anti-incendie (3) et, en même temps, en augmentant la pression dans la cage d'escalier (2) pour empêcher la fumée de se répandre depuis les compartiments anti-incendie (3) dans la cage d'escalier (2) ;
ii. en cas d'écoulement de gaz chauds depuis un compartiment anti-incendie (3) dans la cage d'escalier (2), le régulateur de débit d'air anti-incendie (107) de l'unité de transfert d'air (100) est déclenché pour empêcher l'écoulement ;
iii. en cas de fumée dans la cage d'escalier, le détecteur de fumée de cage d'escalier (205) est déclenché, ce qui amène le ventilateur d'alimentation (200) et le ventilateur d'échappement (201) à se régler à fonctionner au maximum de leur capacité, la soupape de dérivation (204) à être actionnée pour orienter le débit d'air à travers le conduit de dérivation (206) en court-circuitant l'échangeur de chaleur (8), et la soupape d'évacuation de la cage d'escalier (208) à être actionnée en position totalement ouverte, augmentant ainsi le débit d'air depuis les compartiments anti-incendie (2) à travers le conduit d'évacuation de la cage d'escalier (207) pour en évacuer la fumée.

2. Système de ventilation selon l'une quelconque des revendications précédentes, comprenant des moyens de déclencher une alarme incendie à distance et/ou localement en cas de déclenchement du détecteur de fumée de boîte de collecte (203) ou du détecteur de fumée de cage d'escalier (205).

3. Système de ventilation selon l'une quelconque des revendications précédentes, dans lequel les unités de transfert d'air (100) comprennent en outre un dispositif pour empêcher un reflux (108) depuis le terminal de sortie (103) dans le terminal d'entrée (101).

4. Système de ventilation selon l'une quelconque des revendications précédentes, dans lequel l'élément de déclenchement sensible à la chaleur (106) est conçu pour déclencher le régulateur de débit d'air anti-incendie (107) à des températures dépassant 45°C.

5. Système de ventilation selon l'une quelconque des revendications précédentes, dans lequel l'élément de déclenchement sensible à la chaleur (106) est conçu pour déclencher le régulateur de débit d'air anti-incendie (107) à des températures dépassant 72°C.

6. Système de ventilation selon l'une quelconque des revendications précédentes, dans lequel le détecteur de fumée de cage d'escalier (205) est situé au niveau du conduit d'évacuation de la cage d'escalier (207), et la soupape d'évacuation de la cage d'escalier (208) est conçue en fonctionnement normal pour permettre un flux d'air mineur suffisant pour que le détecteur de fumée de cage d'escalier (205) détecte de la fumée dans la cage d'escalier (2).

7. Système de ventilation selon la revendication 8, dans lequel le conduit d'évacuation de la cage d'escalier (207) est conçu de façon que l'air en provenance de la cage d'escalier (2) s'écoule à travers l'échangeur de chaleur (8) vers l'échappement d'air vicié (6) en fonctionnement normal.

8. Système de ventilation selon l'une quelconque des revendications précédentes, dans lequel le compartiment anti-incendie (3) est pourvu d'une entrée d'air frais passive (12) destinée à fournir un débit d'air frais de l'air ambiant à l'extérieur dans le compartiment anti-incendie (3) sans passer par l'échangeur de chaleur (8).

9. Système de ventilation selon l'une quelconque des revendications précédentes, dans lequel le conduit de ventilation (10) aménagé pour transférer de l'air frais de la prise d'air frais (5) vers la cage d'escalier (2) via l'échangeur thermique (8) comprend des sorties d'air individuelles (13) aménagées à plusieurs étages de la cage d'escalier (2) pour fournir un débit d'air frais auxdits étages.

10. Procédé de fonctionnement d'un système de ventilation selon l'une quelconque des revendications précédentes pour évacuer la fumée dans un bâtiment en cas d'incendie, dans lequel :
i. en cas d'incendie dans un compartiment anti-incendie, le détecteur de fumée de boîte de collecte (203) se déclenche ;
le ventilateur d'alimentation (200) et le ventilateur d'échappement (201) sont réglés pour fonctionner au maximum de leur capacité ; et
la soupape de dérivation (204) est actionnée pour orienter un débit d'air à travers le conduit de dérivation (206) en court-circuitant l'échangeur de chaleur (8),
évacuant ainsi la fumée des compartiment anti-incendie (3) et, en même temps, en augmentant la pression dans la cage d'escalier (2) pour empêcher la fumée de se répandre depuis les compartiments anti-incendie (3) dans la cage d'escalier (2) ; et
ii. en cas de fumée dans la cage d'escalier, le détecteur de fumée de cage d'escalier (205) se déclenche ;
le ventilateur d'alimentation (200) et le ventilateur d'échappement (201) sont réglés pour fonctionner au maximum de leur capacité ;
la soupape de dérivation (204) est actionnée pour orienter un débit d'air à travers le conduit de dérivation (206) en court-circuitant l'échangeur de chaleur (8) ; et
la soupape d'évacuation de la cage d'escalier (208) est actionnée en position totalement ouverte, augmentant ainsi le débit d'air depuis les compartiments anti-incendie (2) à travers le conduit d'évacuation de la cage d'escalier (207) pour en évacuer la fumée.

11. Procédé selon la revendication 10, comprenant en outre de déclencher une alarme incendie localement ou à distance, contenant préférentiellement des informations sur la localisation de l'incendie.

12. Procédé selon la revendication 10 ou 11, dans lequel des opérations sont réalisées par l'exécution d'un logiciel sur une unité de contrôle informatisée capable d'exécuter un programme pour commander les ventilateurs (200, 201), les soupapes (204, 208), en recevant des entrées des détecteurs de fumée (203, 205) et, de préférence, des moyens d'émettre des alarmes incendie locales et/ou distantes.

13. Utilisation d'une unité de transfert d'air (100) comprenant :
a. un terminal d'entrée (101) comprenant un clapet d'aération de protection (102) ;
b.un terminal de sortie (103) comprenant un clapet d'aération de protection (104) ;
c. un conduit d'air (105) aménagé pour fournir un passage au débit d'air depuis le terminal d'entrée (101) vers le terminal de sortie (103) ;
**caractérisé en ce que** l'unité (100) comprend un élément de déclenchement sensible à la chaleur (106) conçu pour déclencher un régulateur de débit d'air anti-incendie (107) pour empêcher l'écoulement d'air en cas de température substantiellement élevée, disposé dans le conduit d'air (105),
et **en ce que** l'unité (100) ne comprend pas de moyens de forcer le débit d'air dans un système de ventilation où de l'air frais est fourni dans un compartiment anti-incendie (3) à travers une cage d'escalier (2), ladite unité (100) étant aménagée dans une paroi (4) entre la cage d'escalier (2) et le compartiment anti-incendie (3), dans laquelle le système de ventilation est selon l'une quelconque des revendications 1 à 9.

14. Utilisation selon la revendication 13, dans laquelle la température substantiellement élevée est une température dépassant 45°C.
